# EUROPEAN PATENT APPLICATION

(11) **EP 2 369 268 A2**
(43) Date of publication of application: **28.09.2011**
(21) Application number: 11001308.3
(22) Date of filing: 17.02.2011
(51) Int. Cl.: F25B 9/00

(54) **Hidh-efficiency refrigerating apparatus**

(30) Priority: 25.03.2010 IT TO20100051 U
(71) Applicant: Mondial Group S.R.L., 15020 San Giorgio Monferrato AL (IT)
(72) Inventor: Gallinotti, Marco, 15020 San Giorgio Monferrato (IT); Fossati, Claudio, 15020 San Giorgio Monferrato (IT)
(74) Representative: Garavelli, Paolo

(57) **Abstract**

A high-efficiency refrigerating apparatus is described, equipped with a compression system comprising at least one compressor of a high-efficiency cold-generating fluid.

## Description

The present invention refers to a high-efficiency refrigerating apparatus, aimed in particular to obtain a relevant saving of energy consumptions.

It is now known that the continuous growth of energy demand by the modern society, and mainly by the more advanced industrial societies, is going towards a more and more limited availability of fossil fuels to supply the traditional thermoelectric plants. Among others, the same use of fossil fuels to follow the increased energy requests has taken to well known problems deriving from the immission in the atmoshpere of carbon dioxide and other gases having negative effects on the climate.

In order to solve such problem and consequently reducing the demand for electric energy, one of the solutions to be adopted can be providing to make electrically-operating apparatuses and devices whose consumptions are progressively reduced by using more and more efficient components that are mutually synergetically cooperating, in order to prevent or reduce, in a more and more systematic way, the current energy wastes.

Therefore, object of the present invention is solving the above prior art problems, by providing a refrigerating apparatus that, by using energy-efficient and mutually synergetically cooperating components, allows relevant savings of energy consumptions with respect to comparable apparatuses belonging to the current art.

Another object of the present invention is providing a high-efficiency refrigerating apparatus whose useful life, due to the decrease of energy consumptions, is much longer with respect to the life of comparable apparatuses belonging to the prior art.

Moreover, an object of the present invention is providing a high-efficiency refrigerating apparatus that minimises the frequency of maintenance interventions, and the costs connected thereto, necessary with respect to what is required by comparable apparatuses belonging to the prior art.

The above and other objects and advantages of the invention, as will result from the following description, are obtained with a high-efficiency refrigerating apparatus as claimed in claim 1. Preferred embodiments and non-trivial variations of the present invention are the subject matter of the dependent claims.

The present invention will be better described by some preferred embodiments thereof, provided as a non-limiting example.

To be brief, herein below the descriptions will be omitted that are related to operating modes of common components with other refrigerating units and necessary for the basic operation of the unit itself, that are anyway deemed widely known in the art, such as, for example, electric supply, internal lighting, compression, condensation, ventilation, evaporation and chanalisation systems for refrigerating gases, etc., in order to describe in detail the aspects and components that characterise the refrigerating apparatus according to the present invention.

In particular, advantageously, the high-efficiency refrigerating apparatus according to the present invention is equipped with a compression system comprising at least one compressor of a high-efficiency cold-generating fluid, in terms of Coefficient of Performance (COP, defined as ration between the developed refrigerating power and the necessary electric power) as replacement of the traditional compressor of systems in prior art apparatuses.

Preferably, the high-efficiency compressor uses as cold-generating fluid an hydrocarbon natural gas as replacement of HFC gases used in existing apparatuses, such hydrocarbon natural gas being still more preferably a R600a or R290 HC gas: the use then of a high-efficiency compressor, possibly in cooperation with the adoption of a hydrocarbon natural gas as those described above, allows obtaining a refrigerating apparatus according to the present invention that is able to strongly reduce, with respect to known apparatuses, both the electric current consumption and the obnoxious, direct and indirect impact on the environment: in fact, such R290 and R600a HC gases, even if purified, are present in nature and not chemically derived like HFC. Moreover, the use of natural gases, if respectively compared with the use of currently employed HFC gases, like R404A and R134a, allows, under the same other conditions, to reach greater Coefficients of Performance.

In addition therefore to the "indirect" reduction of the greenhouse effect following the reduced energy consumption, there is a strong reduction of the direct greenhouse effect, as appears from the following Table 1 in which the characteristics of compared cold-generating fluids are included with the COP of the theoretical cycle -30/+30 °C. obtained by the Department of Technical Physics - University of Padua (IT):

**Table 1**

| Gas | Mol. mass | Critical t. [^{o}C] | P.e.n. (glide) [°C] | Cond. P. [bar] | Evap. P. [bar] | t_{fc} | Qₒᵥ | COP | GWP |
|---|---|---|---|---|---|---|---|---|---|
| R290 | 44,10 | 96,8 | -42,1 | 10,8 | 1,68 | 40,5 | 1009 | 2,99 | 8 |
| R600a | 58,12 | 135,0 | -11,8 | 4,04 | 0,46 | 30,0 | 333 | 3,06 | 8 |
| R134a | 102,03 | 101,1 | -26,1 | 7,70 | 0,84 | 41,0 | 613 | 3,02 | 1300 |
| R404A | 97,60 | 72,1 | -46,2 | 14,5 | 2,08 | 38,6 | 1125 | 2,71 | 3750 |

In addition, the refrigerating apparatus according to the present invention could further be equipped with a ventilating and/or condensating system comprising one or more high-efficiency motored fans as replacement of traditional motored fans of systems of prior art apparatuses. The Applicant has detected, through experimental tests, that the only adoption of high-efficiency motored fans allows energy savings up to 40% with respect to prior art apparatuses. In particular, the high energy efficiency motored fans used in the refrigerating apparatus according to the present invention are environmentally compatible and have the mechanical characteristics of a traditional screened 4-pole motor, however incorporating a suitable electronic technology, able to reach a 70% efficiency increase. Moreover, the motored fans of the refrigerating apparatus according to the present invention can be equipped with self-regulating speed controlling means adapted to keep the rotation speed constant independently from the diameter of the installed blade, making it possible to use the same motor in place of current 5-, 10-and 16-W motors depending on the diameter of the blade itself.

Moreover, for a greater intrinsic safety, the motored fans of the refrigerating apparatus according to the present invention can be equipped with protecting means against overload and blocked rotor.

In addition, the refrigerating apparatus according to the present invention could further comprise an internal lighting system equipped with one or more LED-type lights as replacement of traditional flourescence-type lamps of systems of prior art apparatuses. The Applicant has detected, through experimental tests, that the only adoption of LED-type lights allows energy savings up to 70% with respect to prior art apparatuses. Moreover, the LED-type lights, in addition to allow an eco-compatible disposal, have a much longer life, therefore reducing maintenance interventions, in addition to a better and more constant lighting quality. In particular, the lighting system of the refrigerating apparatus according to the present invention is composed of at least one band of such high-intensity LED-type lights with a consumption of 10 W/m and an external switching power supply. The lighting system allows therefore providing the refrigerating apparatus according to the present invention with known advantages of the LED system, such as:
- strong increase of the operating length (high-emission LEDs provide about 50,000 hours, with a end-of-life reduction to 70% of performances in terms of yielded flow and chromatic light quality, versus the 15,000 hours of traditional fluorescent tubes);
- consequent reduction of maintenance costs;
- high lighting efficiency (in particular if compared with low-temperature fluorescent lamps);

- clean light, since it is free from IR and UV components;
- saturated colours and high chromatic yield;
- integrated dissipator and optics;
- chance of safety operation since it is at very low voltage (normally between 3 and 24 Vdc);
- cold start-up (down to -40 °C) without problems;
- insensitivity to humidity and vibrations;
- absence of mercury (low disposal costs);
- length not affected by the number of turning on/off operations.

These direct advantages are summed with the "indirect" ones due to low heat dissipation inside the refrigerating apparatus, generating a front thermal load that not only implies a higher energy consumption, but also a local heating of goods in the most critical position, such as the front surface of goods located by the load level.

In addition, the refrigerating apparatus according to the present invention could further comprise a refrigerating cell closed by at least one fogging-preventing glazed insulating door with null consumption, characterised by a high thermal insulation and by a fogging-preventing surface treatment, preferably composed of at least one internal layer of anti-fog film adapted to remove fogging that prevents the visibility of goods for some minutes after opening. In case of an apparatus according to the present invention with negative temperature, the adoption of such glazed door zeroes the energy consumptions and guarantees the maximum visibility of products exhibited inside the apparatus itself. In particular, the Applicant has experimentally verified that the fogging-preventing glazed insulating door is able to keep the glass free from condensate up to 70% of humidity in an environment at 30°C, for the storage of goods at - 18°C, completely without electric supply, consequently obtaining 100% of energy savings.

Alternatively, the refrigerating apparatus according to the present invention could further comprise a refrigerating cell closed by at least one door equipped with at least one glass with low emissions, that increases the insulation performances without modifying the visibility of exhibited products inside the apparatus itself, positively affecting the energy consumptions.

In addition, the refrigerating apparatus according to the present invention could comprise at least one condensating system comprising a secondary surface of the exchanger free from wings and wide air passage sections in order to avoid trapping the dust between the wings themselves. By therefore avoiding the frequent prevention conditions of the condenser when air passes, the condensing system of the refrigerating apparatus according to the present invention allows, by keeping the condensation pressure at optimum levels, avoiding the high real consumptions that are made without maintenance on known refrigerating apparatuses. These are further energy savings, that are summed to the saving of costs for frequent, as well as often late, maintenance interventions.

In general, the refrigerating apparatus according to the present invention can be made with any known device in the art, depending on its specific purpose of use: such apparatus, in fact, can be a glazed island with negative temperature, a freezing cabinet with negative temperature, a refrigerating cabinet with positive temperature, an exhibitor with vertical window at positive temperature, an exhibitor with vertical window at negative temperature, etc.

In particular, the Applicant has made preformance tests on some practical embodiments of the apparatus according to the present invention, from which actual efficiency increases appears in terms of energy savings and reduction of carbon dioxide CO_{Z} emissions with respect to similar traditional prior art apparatuses. The results of such tests are included in the following Table 2:

**Table 2**

| TYPE | TEMPERATURE RANGE | INTERN. GROSS VOLUME [L] | EQUIPMENT | - ENERGY SAVINGS [%] |
|---|---|---|---|---|
| | | | | - CO₂ EMISSION REDUCTION [KG/YEAR] |
| Glazed island | -18°C / -25°C | 753 | - high-efficiency compressor | - 10% - 173 |
| | | | - high-efficiency motored fan | |
| Glazed island | -18°C / -25°C | 529 | - high-efficiency compressor | - 12% - 163 |
| | | | - high-efficiency motored fan | |
| Frezing cabinet | -18°C / -25°C | 600 | - high-efficiency compressor | - 25% - 459 |
| | | | - high-efficiency motored fan | |
| Refrigerating cabinet | -18°C / -25°C | 605 | - high-efficiency compressor | - 27% - 459 |
| | | | - high-efficiency motored fan | |
| Refrigerating cabinet | +3°C / +8°C | 640 | - high-efficiency compressor | - 53% - 469 |
| | | | - high-efficiency motored fan | |
| Refrigerating cabinet | +3°C / +8°C | 380 | - high-efficiency compressor | - 50% - 377 |
| | | | - high-efficiency motored fan | |
| Exhibitor with vertical window | +3°C / +10°C | 380 | - high-efficiency compressor | - 53% - 459 |
| | | | - high-efficiency motored fan | |
| | | | - LED-type lights | |
| | | | - anti-fogging glazed door with zero consumption | |
| Exhibitor with vertical window | -15°C / -25°C | 1047 | - high-efficiency compressor | - 45% - 2959 |
| | | | - high-efficiency motored fan | |
| | | | - LED-type lights | |
| | | | - anti-fogging glazed door with zero consumption | |
| Exhibitor with vertical window | -15°C / -25°C | 470 | - high-efficiency compressor | - 45 % - 1489 |
| | | | - high-efficiency motored fan | |
| | | | - LED-type lights | |
| | | | - anti-fogging glazed door with zero consumption | |
| Exhibitor with vertical window | -15°C / -25°C | 403 | - high-efficiency compressor | - 45% - 1489 |
| | | | - high-efficiency motored fan | |
| | | | - LED-type lights | |
| | | | - anti-fogging glazed door with zero consumption | |
| Exhibitor with vertical window | -15°C / -25°C | 403 Table | - high-efficiency compressor | - 40% - 1061 |
| | | | - high-efficiency motored fan | |
| | | | - LED-type lights | |
| | | | - anti-fogging glazed door with zero consumption | |

Some embodiments of the invention have been described, but obviously they are subjected to further modifications and variations within the same inventive idea as claimed.

## Claims

1. High-efficiency refrigerating apparatus, **characterised in that** it is equipped with a compression system comprising at least one high-efficiency compressor for cold-generating fluid.

2. Refrigerating apparatus according to claim 1, **characterised in that** said high-efficiency compressor uses as said cold-generating fluid an hydrocarbon natural gas.

3. Refrigerating apparatus according to claim 2, **characterised in that** said hydrocarbon natural gas is a R600a or R290 HC gas.

4. Refrigerating apparatus according to claim 1, **characterised in that** it is equipped with a ventilating and/or condensating system comprising at least one high-efficiency motored fan.

5. Refrigerating apparatus according to claim 4, **characterised in that** said high-efficiency motored fan is equipped with self-regulating speed controlling means adapted to keep a rotation speed constant.

6. Refrigerating apparatus according to claim 4, **characterised in that** said high-efficiency motored fan is equipped with protecting means against overload and blocked rotor.

7. Refrigerating apparatus according to claim 1, **characterised in that** it comprises an internal lighting system equipped with one or more LED-type lights.

8. Refrigerating apparatus according to claim 1, **characterised in that** it comprises at least one refrigerating cell closed by at least one fogging-preventing glazed insulating door with null consumption.

9. Refrigerating apparatus according to claim 8, **characterised in that** said fogging-preventing glazed insulating door is provided with a fogging-preventing surface treatment.

10. Refrigerating apparatus according to claim 9, **characterised in that** said fogging-preventing surface treatment is composed of at least one internal layer of anti-fog film.

11. Refrigerating apparatus according to claim 1, **characterised in that** it comprises a condensation system comprising a secondary surface of an exchanger free from wings and with wide air passage sections.

12. Refrigerating apparatus according to claim 1, **characterised in that** it comprises at least one refrigerating cell closed by at least one insulating door equipped with at least one glass with low emissions.

13. Refrigerating apparatus according to any one of the previous claims, **characterised in that** it is a glazed island with negative temperature, a freezing cabinet with negative temperature, a refrigerating cabinet with positive temperature, an exhibitor with vertical window at positive temperature or an exhibitor with vertical window at negative temperature.
